# FASCICULE DE BREVET EUROPEEN

(11) **EP 2 183 479 B1**
(45) Date de publication et mention de la délivrance du brevet: **20.03.2013**
(21) Numéro de dépôt: 08827435.2
(22) Date de dépôt: 31.07.2008
(51) Int. Cl.: F03B 17/06, F03D 3/00, F03D 3/06, F03D 11/02, F03B 13/10

(54) **EOLIENNE A AXE VERTICAL, NOTAMMENT DE TYPE DARRIEUS**
WINDTURBINE MIT EINER VERTIKALACHSE, INSBESONDERE VOM DARRIEUS-TYP
WIND TURBINE WITH A VERTICAL AXIS, PARTICULARLY OF THE DARRIEUS TYPE

(30) Priorité: 03.08.2007 FR 0756928
(43) Date de publication de la demande: 12.05.2010
(73) Titulaire: Lecanu, Pierre, 14400 Esquay sur Seulles (FR); Breard, Joël, 14750 Saint Aubin Sur Mer (FR)
(72) Inventeur: Lecanu, Pierre, 14400 Esquay sur Seulles (FR); Breard, Joël, 14750 Saint Aubin Sur Mer (FR)
(74) Mandataire: Cabinet HERRBURGER
(86) Numéro de dépôt international: PCT/FR2008/051441
(87) Numéro de publication internationale: WO 2009/022073

(56) Documents cités:
- WO-A-94/29590
- WO-A-03/044362
- DE-A1- 3 522 995
- FR-A- 2 811 030
- US-A- 5 503 525

## Description

La présente invention a pour objet une éolienne à axe vertical, notamment de type Darrieus.

Les spécialistes cherchent depuis longtemps à récupérer l'énergie éolienne qui a l'avantage d'être propre, c'est-à-dire de ne pas engendrer de pollution thermique ou chimique, et parallèlement d'être inépuisable.

Ces avantages sont toutefois compensés dans une large mesure par une série d'inconvénients, liés en particulier au caractère dispersé et intermittent du vent.

Il est en outre bien connu que les « parcs » d'éoliennes consomment beaucoup d'espace et ne fonctionnent pas sans nuisances sonores.

A ces nuisances sonores s'ajoutent des problèmes écologiques, notamment consécutifs aux risques encourus par les oiseaux à proximité des éoliennes.

Ces inconvénients font que le marché des éoliennes n'a pas connu ces dernières années l'essor auquel on aurait pu s'attendre, de sorte que les perspectives de développement dans ce domaine sont aujourd'hui très larges.

La majeure partie des éoliennes commerciales raccordées au réseau comporte un rotor en forme d'hélice soumis à l'action du vent et monté sur un axe horizontal, lui-même fixé à un mât vertical, ainsi qu'un aérogénérateur qui coopère avec le rotor pour fournir de l'énergie électrique.

De telles éoliennes sont particulièrement performantes mais présentent un certain nombre d'inconvénients parmi lesquels on peut mentionner l'obligation de leur adjoindre un mécanisme d'orientation ayant pour fonction d'orienter le rotor dans la direction du vent.

De plus, l'aérogénérateur ainsi que les organes qui lui sont associés (multiplicateur, système de régulation électrique...) doivent obligatoirement être montés à la partie supérieure du mât, ce qui entraîne différentes contraintes.

Pour remédier à ces inconvénients, les spécialistes ont cherché à développer des éoliennes à axe vertical, en particulier de type Darrieus.

De telles éoliennes comportent au moins deux, de préférence trois ailes de rotor profilées, actionnées par le vent et reliées à un axe vertical par des bras de fixation, ainsi qu'un aérogénérateur coopérant avec les ailes de rotor pour fournir de l'énergie électrique.

Ces éoliennes ont en règle générale un profil du type dit « naca ».

Elles présentent l'avantage de ne pas avoir à être orientées dans la direction du vent et de permettre de placer l'aérogénérateur et les organes associés à terre, mais ne sont pas dénuées d'inconvénients, en particulier du fait qu'elles ne démarrent pas automatiquement, ce qui n'est toutefois que peu contraignant dans le cas d'une éolienne raccordée au réseau, compte tenu du fait qu'il est alors possible d'utiliser l'aérogénérateur comme un moteur absorbant du courant du réseau pour démarrer l'éolienne.

Toutefois, l'inconvénient majeur qui a jusqu'à présent freiné le développement des éoliennes à axe vertical est lié à leur faible efficacité qui est une conséquence directe de leur principe de fonctionnement.

En effet, le fonctionnement d'une éolienne à axe vertical repose sur l'effet de portance subi par les ailes de rotor profilées soumis à l'action d'un vent apparent dont la vitesse correspond à la résultante de la vitesse tangentielle de l'aile de rotor et de la vitesse réelle du vent.

L'effort aérodynamique (force induite) qui s'exerce sur une aile de rotor est pratiquement normal au vent apparent.

Cette force induite peut se décomposer en une force axiale ou tangentielle dénommée traînée dans le domaine aéronautique et en une force normale ou portance perpendiculaire à celle-ci.

Le couple moteur s'exerçant sur chacune des ailes de rotor correspond ainsi au produit du rayon de l'éolienne par cette force axiale.

Par suite, la force normale ou portance de la force induite qui est beaucoup plus importante n'est pas récupérée.

Il en résulte qu'une éolienne à axe vertical de type Darrieus même très performante ne peut tout au plus que récupérer 50 % de la puissance disponible du vent.

La présente invention a pour objet de remédier à cet inconvénient en proposant une oelienne à axe vertical dont le rendement est augmenté de façon très significative.

Il est à noter que l'invention n'est nullement limitée aux éoliennes de type Darrieus et peut également s'appliquer à des éoliennes, à axe vertical, à simple traînée, à traînée différentielle, à circulation instationnaire, telles qu'à titre d'exemple non limitatif des turbines de type Giromill ou de type à aubes profilées, fixes ou non.

Selon l'invention tel que défini dans la revendication 1, une telle turbine comporte au moins deux ailes de rotor profilées actionnées par un fluide hydraulique, notamment par le vent et reliées à un axe vertical, par des bras de fixation, ainsi qu'un aérogénérateur coopérant avec les ailes de rotor pour fournir de l'énergie électrique.

Cette turbine est caractérisée en ce que les bras de fixation des ailes de rotor sont équipés de moyens d'activation permettant de récupérer l'énergie des composantes normales ou portance des forces induites par le fluide hydraulique notamment par le vent apparent pour générer de l'énergie électrique.

De tels moyens d'activation linéaires subissent un mouvement de va-et-vient lors de chaque rotation de la turbine.

Cette énergie mécanique peut ensuite être convertie en énergie électrique.

On obtient donc ainsi en quelque sorte une turbine à portance active.

Selon l'invention, les moyens d'activation sont constitués par des générateurs linéaires dont les noyaux sont respectivement solidaires des ailes de rotor associées.

Selon l'invention, on peut associer à chacune des ailes de rotor de la turbine un ou plusieurs générateurs linéaires dont la position par rapport à l'axe de rotation de celle-ci peut être quelconque.

Selon les cas, le montage de ces générateurs linéaires peut nécessiter l'adjonction d'articulations à rotule.

Les caractéristiques de la turbine à portance active qui fait l'objet de l'invention seront décrites plus en détail en se référant aux dessins non limitatifs annexés dans lesquels :
- la figure 1 est une vue de dessus schématique d'une éolienne de type Darrieus conforme à l'invention,
- les figures 2a, 2b, 2c et 2d sont des vues de face schématiques d'une telle éolienne illustrant quatre possibilités de montage des moyens d'activation.

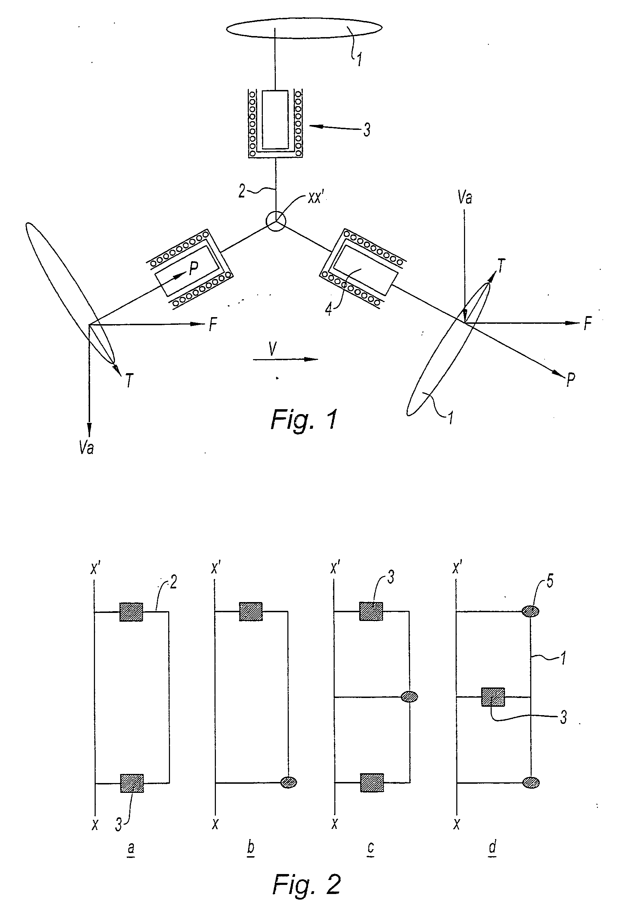

Selon la figure 1, l'éolienne comporte trois ailes de rotor profilées 1 reliées à un axe vertical x x' par l'intermédiaire de bras de fixation 2.

Les ailes de rotor 1 sont soumises à l'action d'un vent apparent Va dont la vitesse correspond à la résultante de la vitesse du vent réel V et de la vitesse tangentielle des ailes 1.

Ce vent apparent Va exerce sur les ailes de rotor 1 une force induite F qui est normale à celle-ci.

Cette force induite F se décompose en une force axiale ou traînée T et en une force normale ou portance P.

La traînée T est classiquement utilisée par un aérogénérateur non représenté sur les figures pour fournir de l'énergie électrique.

Selon la figure 1, des générateurs linéaires 3 sont montés sur les bras de fixation 2 des ailes de rotor 1.

Les noyaux 4 de ces générateurs linéaires 3 sont solidaires des ailes de rotor 1 associées.

Ces générateurs linéaires 3 subissent un mouvement de va-et-vient au cours de chaque rotation de l'aile de rotor 1 associée.

L'énergie mécanique ainsi obtenue est convertie en énergie électrique, ce qui permet de récupérer l'énergie de la portance P.

Selon les figures 2a à 2d, un ou deux générateur(s) linéaire(s) 3 peu(ven)t être associé(s) à chacune des ailes de rotor 1.

Les montages représentés sur les figures 2b, 2c et 2d nécessitent l'adjonction d'une ou de deux articulation(s) à rotule 5.

## Revendications

1. Eolienne à axe vertical, notamment de type Darrieus, comportant au moins deux, de préférence trois ailes de rotor profilées (1) actionnées par le vent, et reliées à un axe (x x') vertical par des bras de fixation (2), ainsi qu'un aérogénérateur coopérant avec les ailes de rotor (1) pour fournir de l'énergie électrique,
**caractérisée en ce que**
les bras de fixation (2) sont équipés de générateurs linéaires (3) dont les noyaux (4) sont respectivement solidaires des ailes de rotor (1) associées de façon à récupérer l'énergie des composantes normales ou portance (P) des forces (F) induites par le vent apparent pour générer de l'énergie électrique.

## Claims

1. A vertical axis wind turbine, particularly of the Darrieus type, having at least two or preferably three shaped rotor blades (1) driven by the wind, and connected to a vertical shaft (x x') by fastening arms (2), together with a wind-powered generator interacting with the rotor blades (1) to supply electrical energy,
**characterized in that**
the fastening arms (2) are fitted with linear generators (3) whose cores (4) are fixed to the respective associated rotor blades (1), thereby recovering the energy of the normal components or lift (P) of the forces (F) induced by the apparent wind in order to generate electrical energy.

## Patentansprüche

1. Windturbine mit vertikaler Achse, insbesondere vom Typ Darrieus, mit mindestens zwei, vorzugsweise drei profilierten vom Wind angetriebenen und mittels Befestigungsarme 2 mit einer vertikalen Achse (xx') verbundenen Rotorflügeln (1), sowie mit einem zur Abgabe von elektrischer Energie mit den Rotorflügeln (1) zusammenwirkenden (Wind-)Generator,
**dadurch gekennzeichnet, dass**
die Befestigungsarme (2) mit Lineargeneratoren (3) versehen sind, deren Kerne (4) jeweils mit den zugehörigen Rotorflügeln (1) fest verbunden sind, so dass die Energie der normalen Komponente - des Auftriebs - (P) der vom scheinbaren Wind induzierten Kräfte (F) zur Erzeugung von elektrischer Energie genutzt wird.
